# EUROPEAN PATENT SPECIFICATION

(11) **EP 4 029 317 B1**
(45) Date of publication and mention of the grant of the patent: **01.01.2025**
(21) Application number: 20883259.2
(22) Date of filing: 02.11.2020
(51) Int. Cl.: H04W 48/16, H04W 4/50, H04W 76/50, H04W 76/30, H04W 4/70, H04W 4/90, H04W 12/06, H04W 12/08, H04W 76/19, H04W 48/02, H04W 76/18, H04W 60/00

(54) **METHOD AND SYSTEM FOR MANAGING DISCOVERY OF EDGE APPLICATION SERVERS**
VERFAHREN UND SYSTEM ZUR VERWALTUNG DER ENTDECKUNG VON EDGE-ANWENDUNGSSERVERN
PROCÉDÉ ET SYSTÈME DE GESTION DE LA DÉCOUVERTE DE SERVEURS D'APPLICATION PÉRIPHÉRIQUES

(30) Priority: 02.11.2019 IN 201941044495; 08.11.2019 IN 201941045559; 29.10.2020 IN 201941044495
(43) Date of publication of application: 20.07.2022
(73) Proprietor: Samsung Electronics Co., Ltd., Suwon-si, Gyeonggi-do 16677 (KR)
(72) Inventor: GUPTA, Nishant, Suwon-si, Gyeonggi-do, 16677 (KR); PATTAN, Basavaraj Jayawant, Suwon-si, Gyeonggi-do, 16677 (KR); LEE, Jicheol, Suwon-si, Gyeonggi-do 16677 (KR); TIWARI, Kundan, Suwon-si, Gyeonggi-do, 16677 (KR); KIM, Sunghoon, Suwon-si, Gyeonggi-do 16677 (KR)
(74) Representative: Gulde & Partner
(86) International application number: PCT/KR2020/015163
(87) International publication number: WO 2021/086157

(56) References cited:
- GB-A- 2 597 343
- KR-A- 20180 107 000
- KR-A- 20190 114 744
- US-A1- 2019 053 010
- US-B1- 10 172 009
- "5G; Non-Access-Stratum (NAS) protocol for 5G System (5GS); Stage 3 (3GPP TS 24.501 version 15.5.0 Release 15)", vol. 3GPP CT, no. V15.5.0, 1 October 2019 (2019-10-01), pages 1 - 494, XP014355764, Retrieved from the Internet <URL:http://www.etsi.org/deliver/etsi_ts/124500_124599/124501/15.05.00_60/ts_124501v150500p.pdf> [retrieved on 20191001]
- SAMSUNG: "Emergency services during NSSAA that fails for all slices", vol. CT WG1, no. Electronic meeting; 20200602 - 20200610, 26 May 2020 (2020-05-26), XP051891310, Retrieved from the Internet <URL:https://ftp.3gpp.org/tsg_ct/WG1_mm-cc-sm_ex-CN1/TSGC1_124e/docs/C1-203763.zip C1-203763 rev C1-203140 emergency registered.docx> [retrieved on 20200526]
- HUAWEI HISILICON: "AMF redirection at handover from 4G to 5G", 3GPP DRAFT; S2-1910273_08960_501 AMF REDIRECTION AT HANDOVER FROM 4G TO 5G_V1.1, vol. SA WG2, 17 October 2019 (2019-10-17), Split Croatia, pages 1 - 6, XP051797037
- NEC: "Fix PDU Session ID mismatch between UE and AMF", 3GPP DRAFT; C1-198196, vol. CT WG1, 1 November 2019 (2019-11-01), Reno US, pages 1 - 25, XP051811995

## Description

### [Technical Field]

The present disclosure relates to a wireless communication system, and more specifically to relate to a system and a method for managing discovery of an edge application servers.

### [Background Art]

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

An edge computing system is a distributed computing paradigm that brings computations and data storages closer to a geographical location where the computations and the data storages are needed, to improve response times and save bandwidth. An application server running on the edge data network of the edge computing system is known as an edge application server, where the edge application server has varied availability at different edge data networks. A deployment of the edge application server may not be uniform across the edge data network due to operational and cost constraints.

ETSI Technical Specification 124 501 (Version 15.5.0) specifies the non-access stratum (NAS) procedures in the 5G system. KR 2018 0107000 A discloses a communication system supporting reflective QoS. The publication "Emergency services during NSSAAthat fails for all slices" (3GPP document C1-203763) represents a change request for 3GPP TS 24.501. GB 2597343 A discloses a method for network slice authorization by a network management entity in a wireless communications system.

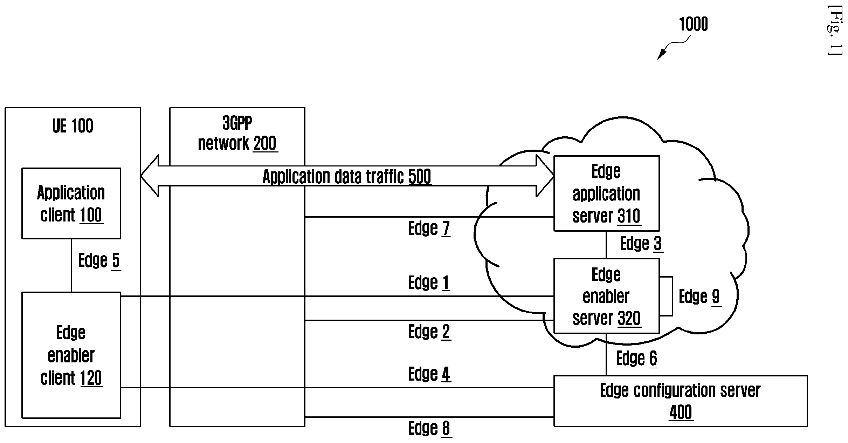

FIG. 1 illustrates a general architecture of the edge computing system (1000) for enabling the edge application server (310) in a 3GPP network (200), according to a prior art. Functional entities in the architecture includes an edge enabler server (320), an edge application server (310), an edge enabler client (120), an application client (110), and an edge configuration server (400). The edge enabler server (320), and the edge application server (310) are part of an edge data network (300) of the edge computing system (1000), whereas the edge enabler client (120), and the application client (110) are part of a User Equipment (UE) 100. The edge application server (310) registers to the edge enabler server (320) through a reference point, i.e. an edge (3). Further, the edge enabler server (320) maintains the registry of the edge application server (310). Further, the edge enabler server (310) registers on the edge configuration server (400) and provides the registry to the edge configuration server (400) for purposes like service continuity through a reference point, i.e. an edge (6).

Further, the edge enabler client (120) provides supporting functions needed for the application client (110) through a reference point, i.e. an edge (5). The edge configuration server (400) provides supporting functions to the edge enabler client (120) through a reference point, i.e. an edge (4), where the supporting functions allows the UE (100) to establish a connection with the edge enabler server (320) through a reference point, i.e. an edge (1). The edge enabler server (320) provides supporting functions needed for the edge application server (310) to run in the edge data network (300). The edge enabler server (320) is deployed within a local data network access point, which is geographically close to a point of attachment of the UE (100). The edge application server (310) and the edge enabler server (320) provide supporting functions to the 3GPP network (200) through an edge (7) and an edge (2) respectively, where the edge (7) and the edge (2) are reference point. When a connection established between the UE (100) and the edge data network (300) through the 3GPP network (200), the application client (110) access required data or services from the edge application server (310) through an interface called application data traffic (500).

Generally, the UE (100) checks for availability of the edge application server (310) from the edge enabler server (320) before attempting to avail the services from the edge application server (310). Multiple discovery methods are available to determine the availability of the edge enabler server (320) at the edge data network (300). However, a design of such methods is specific to needs for the deployment of the edge application server (310) at the edge data network (300). A choice of an discovery method is a crucial business or technical decision for a service provider of the edge systems (1000).

Consider an example scenario, where the UE (100) is connected to a first edge data network in a first location and accessing an online video service supports by the first edge data network. Further, the UE (100) is relocating to a second location contains a second edge data network from the first location, where the second edge data network also support the online video service. The UE (100) may not be aware about the second edge data network in the second location. The UE (100) does not switch to the second edge data network and continues to access the online video service from the first edge data network. Due to moving away from the first location, the latency increases at the UE (100) in accessing the online video service from the first edge data network, which worsen an online video viewing experience of a user.

Further, the UE (100) includes a plurality of subscribed Single-Network Slice Selection Identifier (S-NSSAI). The subscribed S-NSSAI is provided based on subscriber information which the UE (100) is subscribed to use in a Public Land Mobile Network (PLMN). Certain subscribed S-NSSAIs subjects to a network slice-specific authentication and authorization procedure. The network slice-specific authentication and authorization procedure is executed by Authentication, Authorization and Accounting Server (AAA-S). The network slice-specific authentication and authorization procedure takes place between an EAP client on the UE (100) and EAP server on the AAA-S. The network slice-specific authentication and authorization procedure will be triggered by Access and Mobility Function (AMF) for an S-NSSAI requiring for a PLMN to perform slice-specific authentication and authorization with an Authentication, Authorization, and Accounting-Server (AAA-S). A Home-PLMN (H-PLMN) operator or a third party which has a business relationship with the H-PLMN hosts the AAA-S. When the network slice-specific authentication and authorization is successful for the S-NSSAI, then the S-NSSAI is sent to the UE (100) in an allowed Network Slice Selection Identifier (NSSAI) of a registration accept or a Configuration Update Command message. The allowed NSSAI is a NSSAI provided by a serving PLMN during a registration procedure or indicating the S-NSSAIs values the UE (100) could use in the serving PLMN for a current registration area. The UE (100) is allowed to access the services related to the S-NSSAI. For example, the UE (100) can establish a Protocol Data Unit (PDU) session related to the S-NSSAI and access the services through the PDU session.

Certain UEs and Access and mobility Management Functions AMPs has the capability to support the network slice specific authentication and authorization procedure. The UEs that support the network slice specific authentication and authorization procedure will indicate the capability of the UEs to the AMF. But, the AMF that supporting the network slice specific authentication and authorization procedure will not indicate the capability of the AMFs to the UE. The UE (100) sends a registration request message including a request NSSAI to the AMF. When the network slice-specific authentication and authorization fails for all the S-NSSAIs in the allowed NSSAI, the AMF executes a network-initiated deregistration procedure described in a 3GPP specification TS 23.502 of clause 4.2.2.3.3. Further, the AMF includes a list of rejected S-NSSAIs with an appropriate rejection cause value to an explicit de-registration request message. However, a behavior of the UE (100) and the network is undefined for a scenario when the UE (100) has the PDU session for emergency. Moreover, a way a UE supporting system other than a fifth generation system (e.g. Evolved Packet System (EPS)) handles this scenario is also unclear.

Thus, it is desired to address the above mentioned disadvantages or other shortcomings or at least provide a useful alternative.

### [Disclosure of Invention]

### [Technical Problem]

According to the claimed solution, an object of the embodiments herein is to provide a method for handling a PDU session during an emergency service.

### [Technical Solution]

The invention is defined by the appended set of claims which define methods and apparatus for handling a PDU session during an emergency service.

Accordingly, unclaimed aspects provide a method for managing discovery of an edge application servers (310). The method includes sending, by an edge enabler client (120) of a UE (100), an initial service provisioning request to an edge configuration server (400). Further, the method includes receiving, by the edge enabler client (120) of the UE (100), an initial service provisioning response comprises an information element from the edge configuration server (400), where the information element indicates the supported discovery mode. Further, the method sending, by the edge enabler client (120) of the UE (100), a request for discovering the edge application server (310) to at least one of the edge configuration server (400), a dedicated server for an edge application server information, and a Domain Name System (DNS) server based on the supported discovery mode.

In an unclaimed aspect, the discovery mode is specific to at least one of a location of the UE (100) and an application in the UE (100).

In an unclaimed aspect, the method further includes detecting, by the edge enabler client (120) of the UE (100), that the service provisioning configuration is not valid anymore and another provisioning request is sent to the edge configuration server (400) by the UE (100). Further, the method includes discovering by the edge enabler client (120) of the UE (100), the edge application server using the discovery mode based on the received service provisioning information.

Accordingly, unclaimed aspects provide a method in which a centrally deployed Edge Enabler Server (620) provides assistance to the Edge Enabler Server (320) deployed in a local data network (300) or the Edge Enabler Client (120) on the UE (100).

Accordingly, unclaimed aspects provide a method for managing services provided to at least one of an edge application server (310) and an edge enabler client (120) of the UE (100). The method includes receiving, by a centralized edge enabler server (620), a request message comprising a service support request from at least one of an edge application server (310) and the edge enabler client (120) of the UE (100). Further, the method includes configuring, by the centralized edge enabler server (620), a response message comprising a service support information based on the received request message. Further, the method includes sending, by the centralized edge enabler server (620), the response message comprising the service supporting information to at least one of the edge application server (310) and the edge enabler client (120) of the UE (100).

In an unclaimed aspect, the method includes allowing, by the centralized edge enabler server (620), the edge application server (320) to publish an edge application server information from at least one edge data network (300) based on the response message.

In an unclaimed aspect, the method includes allowing, by the centralized edge enabler server (620), the edge enabler client (120) to discover the edge application servers (310) across the at least one edge data network (300) based on the response message.

In an unclaimed aspect, the method includes exposing, by the centralized edge enabler server (620), a location reporting API to the edge application server (310) across at least one the edge data network (300) based on the response message, and determining valid location of the UE based on the location reporting API.

In an unclaimed aspect, the method includes exposing, by the centralized edge enabler server (620), a UE identifier API to the Edge Application Server to provide valid UE identifier for a capability exposure APIs based on the response message.

In an unclaimed aspect, the method includes allowing, by the centralized edge enabler server (620), a subscription from the edge enabler client (120) to the centralized edge enabler server (620) for an information based on the response message., wherein the information comprises dynamic availability of the edge application server (310).

In an unclaimed aspect, the method includes determining, by the centralized edge enabler server (620), whether an application context for the UE (120) is to be relocated and to provide an instruction to the edge application server (310) based on the response message, and configuring, by the Edge Application Server (310), the UE application context to be relocated and transfer the UE application context to a target Edge Application Server based on the response message.

In an unclaimed aspect, the method includes providing, by the centralized edge enabler server (620), an IP address of a target edge application server, wherein the IP address serves the UE in mobility when the UE application context is relocated.

In an unclaimed aspect, the method includes allowing, by centralized Edge Enabler Server (620, a registration of edge application server (310) from the at least one edge data networks (310) to provide a profile information based on the response message.

Accordingly, unclaimed aspects provide a system (1000) for managing discovery of an edge application server (310). The system (1000) includes a UE (100) comprising an edge enabler client (120), one or more edge application server (310), and a centralized edge enabler server (620). The centralized edge enabler server (620) is configured to receive a request message comprising a service support request from at least one of an edge application server (310) and the edge enabler client (120) of the UE (100). The centralized edge enabler server (620) configures a response message comprising a service support information based on the request message. The centralized edge enabler server (620) sends the response message comprising the service support information to at least one of the edge application server (310) and the edge enabler client (120) of the UE (100).

Accordingly, unclaimed aspects provide a method for managing discovery of an edge application servers (310). The method includes receiving, by a centralized edge enabler server (620), a message comprising a service application programming interface (API) publish and discovery information from at least one edge application server (310). Further, the method includes performing, by the centralized edge enabler server (620), at least one of: providing at least one of an edge application access to a service API offered by the at least one edge application server (310) in the edge data network (300) by providing Common API Framework (CAPIF) function based on the received message, and providing at least one of a function for an edge application server service APIs publish and discovery response to the the at least one edge application server (310) based on the received message.

In an unclaimed aspect, the at least one of edge application is controlled by a third party server and a PLMN operator.

In an unclaimed aspect, at least one of the function is a CAPIF core function to support on boarding of the edge application server (310), publish of an edge application server's service APIs, discovery of edge application server's service APIs and charge of edge application server's service APIs invocations.

In an unclaimed aspect, the method includes providing, by the edge application server (310), at least one function for edge application server's service APIs publish and discovery response.

In an unclaimed aspect, at least one the function is an API exposing function, an API publishing function, and an API management function.

In an unclaimed aspect, the API exposing function supports an invocation of a service APIs exposed from the edge application server (310) via a CAPIF-2 or a CAPIF-2e and supports charging of edge application server's service API invocations via a CAPIF-3.

In an unclaimed aspect, the API publishing function supports publishing of the service APIs of the edge application to a CAPIF core function of the edge enabler server (320) via a CAPIF-4.

In an unclaimed aspect, the API management function supports a management of the service APIs of the edge application server (310) to the CAPIF core function of the edge enabler server (320) via a CAPIF-5.

In an unclaimed aspect, the edge application server (310) acts as API exposing function and service APIs, wherein the API exposing function and service APIs are published to the centralized edge enabler server (620), wherein the edge application service APIs are made available to each other by the centralized edge enabler server (620).

In an unclaimed aspect, the edge application server (310) acts as an API invoker and is onboarded to the centralized edge enabler server (620).

In an unclaimed aspect, the edge application server (310) is authenticated with the centralized edge enabler server (620).

In an unclaimed aspect, the method further includes discovering, by the edge application server (310), the service APIs published by the edge application server (310) via the centralized edge enabler server including an end point address of the API exposing function where the service API invocation is to be performed.

Accordingly, the claimed embodiments herein provide a method for handling a PDU session during an emergency service as defined in the appended claims.

Accordingly, the embodiments herein provide an AMF server (800) for handling a PDU session during an emergency service as defined in the appended claims.

Accordingly, the embodiments herein provide a UE (100) for handling a PDU session during an emergency service as defined in the appended claims.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the claims.

### [Brief Description of Drawings]

This method and apparatus are illustrated in the accompanying drawings, throughout which like reference letters indicate corresponding parts in the various figures. The embodiments herein will be better understood from the following description with reference to the drawings, in which:
FIG. 1 illustrates a general architecture of an edge computing system (1000) for enabling an edge application server (310) in a 3GPP network, according to a prior art;
FIG. 2 is a block diagram of a UE (100), according to an embodiment as disclosed herein;
FIG. 3a is a flow chart illustrating a method, implemented by the UE (100), for managing discovery of the edge application servers (310), according to an embodiment as disclosed herein;
FIG. 3b is a flow chart illustrating a method, implemented by the centralized edge enabler server (620), for managing discovery of the edge application servers (310), according to an embodiment as disclosed herein;
FIG. 3c is a flow chart illustrating a method for handling an PDU session during an emergency service, according to an embodiment as disclosed herein;
FIG. 3d is a flow chart illustrating a method for managing services provided to at least one of an edge application server (310) and an edge enabler client (120) of the UE (100), according to an embodiment as disclosed herein;
FIG. 3e is a flow chart illustrating a method for handling the PDU session during the emergency service, according to an embodiment as disclosed herein;
FIG. 4 illustrates signaling between the UE (100) and an edge configuration server (400) for provisioning the UE with configurations from the edge configuration server (400), according to an embodiment as disclosed herein;
FIG. 5 illustrates a proposed architecture of the edge computing system (1000) for enabling the edge application server (310) in the 3GPP network, according to an embodiment as disclosed herein;
FIG. 6 illustrates a proposed architecture of the edge computing system (1000) for publishing and discovering a service Application Programming Interface (API) of the edge application server (310) by using a Common API Framework (CAPIF) core function, according to an embodiment as disclosed herein;
FIG. 7 is a sequential diagram illustrating a method for managing an application context relocation, according to an embodiment as disclosed herein;
FIG. 8 illustrates an overview of a system (1000) for handling an PDU session during an emergency service, according to an embodiment as disclosed herein; and
FIG. 9 is a block diagram of an AMF server (800), according to an embodiment as disclosed herein. Among the above figures, the embodiments of Fig. 3c, 3e and 8 pertain to the claimed solution.

### [Mode for the Invention]

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the embodiments herein.

As is traditional in the field, embodiments may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

Accordingly, the embodiments herein disclose a method for managing discovery of an edge application servers (310. The method includes sending, by an edge enabler client (120) of a UE (100), an initial service provisioning request to an edge configuration server (400). Further, the method includes receiving, by the edge enabler client (120) of the UE (100), an initial service provisioning response comprises an information element from the edge configuration server (400), where the information element indicates the supported discovery mode. Further, the method sending, by the edge enabler client (120) of the UE (100), a request for discovering the edge application server (310) to at least one of the edge enabler server (400), a dedicated server for an edge application server information, and a Domain Name System (DNS) server based on the supported discovery mode.

Unlike existing methods and systems, the proposed method allows an edge computing service provider to assist a UE for selecting a right discovery method. Further, the UE can adjust its behavior according to the selected discovery method and determine an availability of an edge application server in an edge data network using the discovery method. Thus, the proposed method reduces a complexity in an edge computing system in choosing the right discovery method for determining the availability of the edge application server in the edge data network.

Unlike existing methods and systems, a centralized edge enabler server contains information about service APIs of all edge application servers of all edge data networks. In response to receiving a request for relocation of an application context, the centralized edge enabler server identifies a second edge data network suitable for transferring the application context from a first edge data network. The centralized edge enabler server identifies the second edge data network based on the information about service APIs of an edge application server in the second edge data network. A latency in accessing a service at the UE will get reduced due to transferring the application context from the first edge data network to the second edge data network. Thus, the proposed method improves a user experience due to a reduced latency in accessing the service.

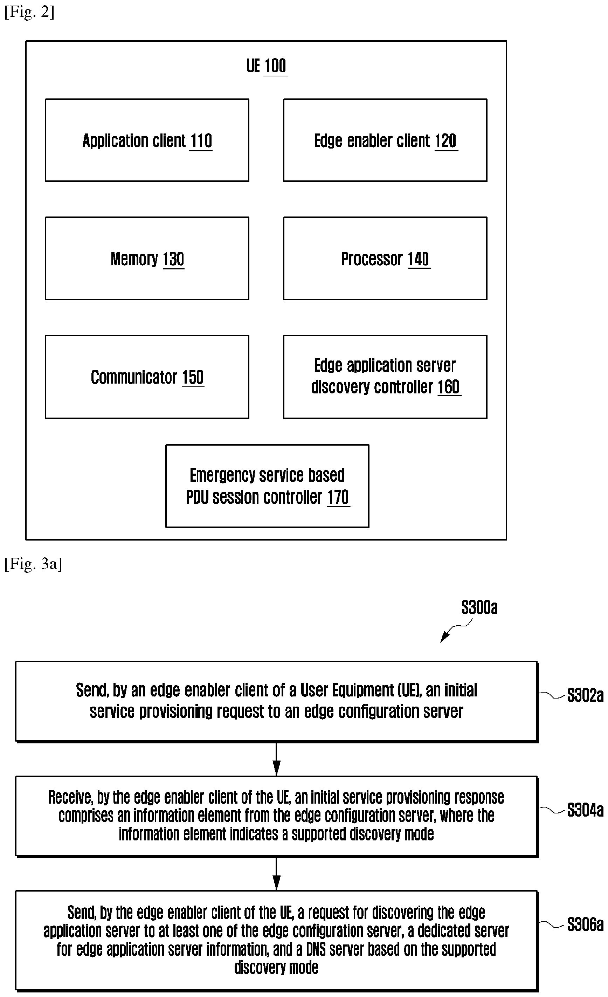

Referring now to the drawings, and more particularly to FIGS. 2 through 9, there are shown preferred embodiments.

FIG. 2 is a block diagram of a UE (100), according to an embodiment as disclosed herein. Examples for the UE (100) are, but not limited to a smart phone, a tablet computer, a personal digital assistance (PDA), an Internet of Things (IoT), an immersive device, a virtual reality device and the like. In an embodiment, the UE (100) includes an application client (110), an edge enabler client (120), a memory (130), a processor (140), a communicator (150), an edge application server discovery controller (160) and an emergency service based PDU session controller (170). The processor (140) is coupled with the application client (110), the edge enabler client (120), the memory (130), the communicator (150), the edge application server discovery controller (160), and the emergency service based PDU session controller (170).

The edge enabler client (120) provides supporting functions needed for the application client (110) through a reference point, i.e. an edge (5). The edge application server discovery controller (160) is operated with the edge enabler client (120). The edge application server discovery controller (160) is configured to send the initial service provisioning request to an edge configuration server (400) and receive an initial service provisioning response comprises an information element from the edge configuration server (400). The information element indicates the supported discovery mode. Further, the edge application server discovery controller (160) is configured to send a request for discovering the edge application server (310) to at least one of the edge configuration server (400), a dedicated server for an edge application server information, and a DNS server based on the supported discovery mode.

The emergency service based PDU session controller (170) receives a deregistration request message with the rejection cause value #62 from an AMF server (800). Further, the emergency service based PDU session controller (170) selects an E-UTRAN cell of a network and initiates an attach procedure to the network based on the deregistration request message. Based on the attach procedure, the emergency service based PDU session controller (170) disables a N1 mode capability for a 3GPP access.

The memory (130) may include non-volatile storage elements. Examples of such non-volatile storage elements may include magnetic hard discs, optical discs, floppy discs, flash memories, or forms of an Electrically Programmable Memory (EPROM) or an Electrically Erasable and Programmable Memory (EEPROM).

In addition, the memory (130) may, in some examples, be considered a non-transitory storage medium. The term "non-transitory" may indicate that the storage medium is not embodied in a carrier wave or a propagated signal. However, the term "non-transitory" should not be interpreted that the memory (130) is non-movable. In some examples, the memory (130) can be configured to store larger amounts of information than the memory (130) respectively. In certain examples, a non-transitory storage medium may store data that can, over time, change (e.g., in Random Access Memory (RAM) or cache).

The processor (140) is configured to execute instructions stored in the memory (130). The communicator (150) is configured to communicate internally between hardware components in UE (100) and the server.

Although the FIG. 2 shows the hardware components of the UE (100) but it is to be understood that other embodiments are not limited thereon. In other embodiments, the UE (100) may include less or more number of components. Further, the labels or names of the components are used only for illustrative purpose and does not limit the scope of the invention. One or more components can be combined together to perform same or substantially similar function for managing discovery of the edge application servers (310).

FIG. 3a is a flow chart (S300a) illustrating a method, implemented by the UE (100), for managing discovery of the edge application server (310) of the edge data network (300), according to an embodiment as disclosed herein.

At S302a, the method includes sending, by the edge enabler client (120), the initial service provisioning request to the edge configuration server (400). At S304a, the method includes receiving, by the edge enabler client (120), the initial service provisioning response comprises an information element from the edge configuration server (400). The information element indicates the supported discovery mode. At S306a, the method sending, by the edge enabler client (120), the request for discovering the edge application server (310) to at least one of the edge configuration server (400), a dedicated server for an edge application server information, and a DNS server based on the supported discovery mode.

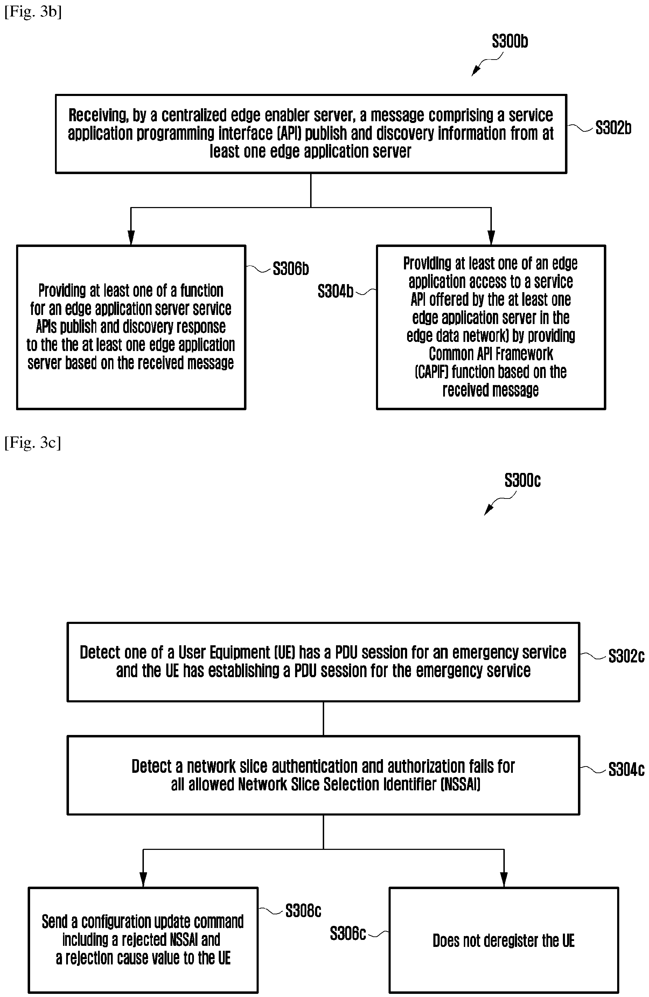

FIG. 3b is a flow chart (S300b) illustrating a method, implemented by the centralized edge enabler server (620), for managing discovery of the edge application servers (310, according to an embodiment as disclosed herein.

At S302b, the method includes receiving, by the centralized edge enabler server (620), the message comprising the service application programming interface (API) publish and discovery information from at least one edge application server (310). At S304b, the method includes providing at least one of an edge application access to a service API offered by the at least one edge application server (310) in the edge data network (300) by providing Common API Framework (CAPIF) function based on the received message. At S306b, the method includes providing at least one of a function for the edge application server service APIs publish and discovery response to the the at least one edge application server (310) based on the received message.

FIG. 3c is a flow chart (300c) illustrating a method for handling a PDU session during an emergency service, according to an embodiment as disclosed herein. At S302c, the method includes detecting, by an AMF server (800), one of a UE (100) has a PDU session for an emergency service and the UE (100) is establishing a PDU session for the emergency service. At S304c, the method includes detecting, by the AMF server (800), a network slice authentication and authorization fails for all allowed Network Slice Selection Identifier (NSSAI). At S306c, the method includes avoiding registering, by the AMF server, with the UE (100). At S308c, the method includes sending the configuration update command including a rejected NSSAI and a rejection cause value to the UE (100).

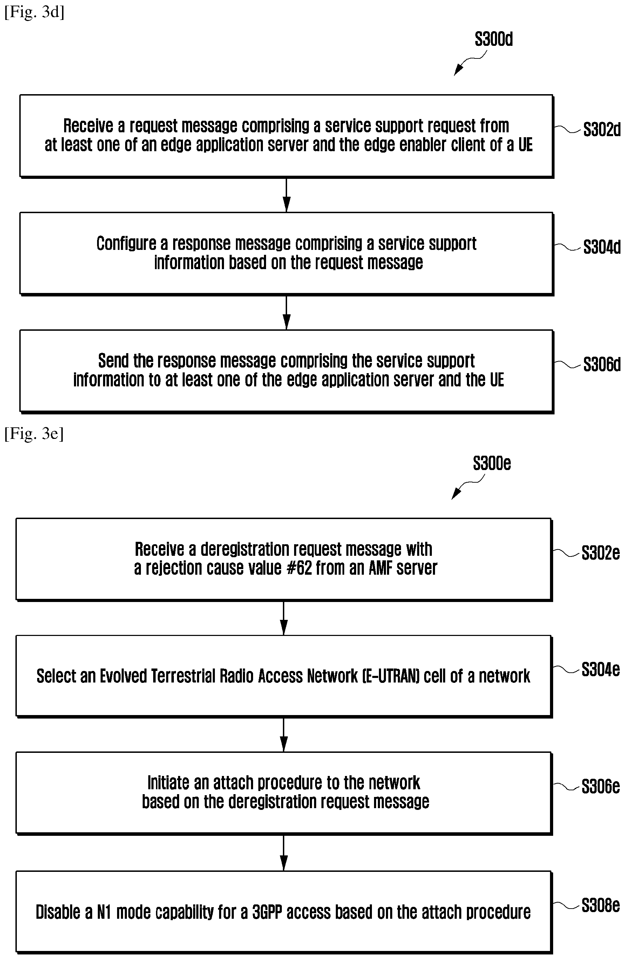

FIG. 3d is a flow chart (300d) illustrating a method for managing services provided to at least one of an edge application server (310) and an edge enabler client (120) of the UE (100), according to an embodiment as disclosed herein. At 302d, the method includes receiving a request message comprising a service support request from one or more edge application server (310a and 310b) and the UE (100). At 304d, the method includes configuring the response message comprising the service support information based on the request message. At 306d, the method includes sending the response message comprising the service supporting information to at least one of the edge application server (310) and the edge enabler client (120) of the UE (100).

FIG. 3e is a flow chart (300e) illustrating a method for handling the PDU session during the emergency service, according to an embodiment as disclosed herein. At 302e, the method includes receiving the deregistration request message with the rejection cause value #62 from the AMF server (800). At 304e, the method includes selecting the E-UTRAN cell of the network. At 306e, the method includes initiating an attach procedure to the network based on the deregistration request message. At 308e, the method includes disabling a N1 mode capability for a 3GPP access based on the attach procedure.

The various actions, acts, blocks, steps, or the like in the flow diagram S300a, S300b, S300c, S300d and S300e may be performed in the order presented, in a different order or simultaneously. Further, in some embodiments, some of the actions, acts, blocks, steps, or the like may be omitted, added, modified, skipped, or the like without departing from the scope of the invention.

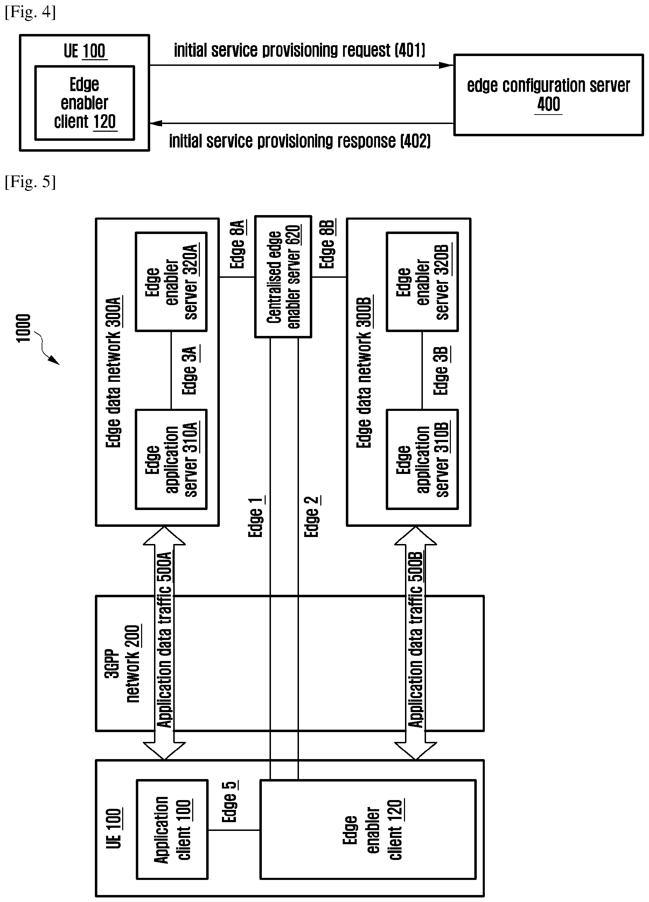

FIG. 4 illustrates signaling between the UE (100) and the edge configuration server (400) for provisioning the UE (100) with configurations from the edge configuration server (400), according to an embodiment as disclosed herein. Various discovery methods available for the UE (100) to determine the availability of the edge enabler server (320) at the edge data network (300) are given below:
1) Distributed discovery: The edge enabler client (120) can query to the edge enabler server (320) for obtaining information about the edge application server (310).
2) Centralized discovery: The edge enabler client (120) can query to the edge configuration server (400) for obtaining the information about the edge application server (310).
3) Hybrid discovery: The edge configuration server (400) can redirect the edge enabler client (120) to the edge enabler server (320). Further, the edge enabler server (320) can provide the information about the edge application server (310) to the edge enabler client (120).
4) Dedicated server based discovery: The edge configuration server (400) can redirect the edge enabler client (120) to a dedicated server. Further, the dedicated server can provide the information about the edge application server (310) for a security of the information.
5) DNS based discovery: The edge enabler client (120) can obtain the information about the edge application server (310) by communicating to a dedicated/shared DNS server.

The edge enabler client (120) performs provisioning with configuration information (i.e. information about the edge application server (310) obtained from the edge configuration server (400) to enable communication between the application client (110) and the edge application server (310) having the services.

In an embodiment, the UE (100) includes a dedicated edge data network configuration client for receiving the configuration information from the edge configuration server (400). In an embodiment, a DNS server can be used to provide discovery methods to the UE (100).

The proposed method for determining the availability of the edge enabler server (320) at the edge data network (300) in steps 401-402. At step 401, the edge enabler client (120) sends an initial service provisioning request to the edge configuration server (400). At step 402, the edge configuration server (400) sends an initial service provisioning response includes the configuration information to the UE (100). Information elements in the configuration information is given in table 1. 'Discovery mode' and 'other provisioning related information' are the information elements in the configuration information.

### Table 1: Initial service provisioning response

**[Table 1]**

| Information elements | Status | Description |
|---|---|---|
| Discovery mode | M | The supported mode of discovery. |
| Other provisioning related information | M | Other provisioning related information. |

The information element 'discovery mode' indicates the discovery method supported by the edge data network (300). In an embodiment, the discovery mode is specific to at least one of the UE (100), a location of the UE (100), an application, an application type, an application category. In an embodiment, the UE (100) determines the discovery mode based on the configuration information received in the provisioning response. For example, when the initial service provisioning response includes a DNS resolver configuration, then the UE (100) determines that the discovery mode that is supported by the edge data network (300) is the DNS based discovery. In another example, when the initial service provisioning response includes an EAS configuration, then the UE (100) determines that the discovery mode that is supported by the edge data network (300) is the centralized discovery.

In an embodiment, the UE (100) continues to use one discovery mode unless the configuration information is either explicitly changed by the edge configuration server (400) or changed because of sending another provisioning request by the UE (100). When a service area of the UE (100) ever changes, then the UE (100) sends another provisioning request.

In an embodiment, if the multiple discovery methods are used in the deployment of the edge computing service, and when the edge configuration server (400) distributes the information about the edge application server (310) to different edge enabler servers (not shown), then the edge configuration server (400) includes information about an entity from which the UE (100) needs to query for the information about the edge application server (310) along with the discovery mode information element.

Such an implicit determination will fail in case the initial service provisioning response includes the information about the edge enabler server (320) that leads to two discovery modes. Consider, the two discovery modes are the distributed discovery and the hybrid discovery. In case of the distributed discovery, the UE (100) needs to direct all future discovery requests to the edge enabler server (320). In case of the hybrid discovery, the initial service provisioning request from the UE (100) should be first directed to the edge configuration server (400) for all discovery needs. Therefore, having an explicit indication of the supported mode as described in this invention is deterministic.

Having the indication of the discovery mode in the initial service provisioning response clarifies a course of action for the UE (100). Therefore, the UE (100) can adjust its behavior based on the discovery mode. For example, the UE (100) can decide whether to subscribe for notifications with the edge enabler server (320) or the edge configuration server (400) based on the initial service provisioning response. Names of the servers used here are only for illustrative purpose and does not limit the scope of the invention. In real time, various other names of the server based on a scenario can be used.

FIG. 5 illustrates a proposed architecture of the edge computing system (1000) for enabling the edge application server (310) in the 3GPP network (200), according to an embodiment as disclosed herein. The proposed architecture of the edge computing system (1000) includes the UE (100), the 3GPP network (200), the centralized edge enabler server (620), and a plurality of edge data networks (300A, 300B). An edge application server (310A) and an edge enabler server (320A) of the edge data network (300A) communicates through an edge (3) of the edge data network (300A), i.e. edge (3A). The edge data network (300A) communicates with the UE (100) through an application data traffic (500A). The edge data network (300A) communicates with the centralized edge enabler server (620) through a reference point called as an edge (8A). An edge application server (310B) and an edge enabler server (320B) of the edge data network (300B) communicate through an edge (3) of the edge data network (300A), i.e. edge (3B). The edge data network (300A) communicates with the UE (100) through an application data traffic (500B). The edge data network (300A) communicates with the centralized edge enabler server (620) through a reference point called as an edge (8B). The centralized edge enabler server (620) communicates with the edge enabler client (120) of the UE (100) and the 3GPP network (200) through an edge (1) and an edge (2) respectively, where the edge (1) and the edge (2) are reference points.

The centralized edge enabler server (620) provides supporting functions needed for the edge application servers (310A, 310B). The edge (8A) and the edge (8B) are reference points between the centralized edge enabler server (620) and the edge application servers (310A, 310B), where the edge (8A) and the edge (8B) supports interactions related to the edge enabler layers. The edge (8A) and the edge (8B) allows registration of the edge application servers (310A, 310B) with availability information such as time constraints, location constraints, etc. Further, the edge (8A) and the edge (8B) allows the UE (100) to access to network capability information such as a location information. The centralized edge enabler server (620) allows the edge application servers (310A, 310B) to publish the information about the edge application servers (310A, 310B) from multiple edge data networks (300A, 300B) to provide profile/availability information of the edge application servers (310A, 310B) such as, a geographical area of availability of the edge application servers (310A, 310B), a time of operation of the edge application servers (310A, 310B), etc.

The centralized edge enabler server (620) determines whether an application context for the UE (100) is to be relocated and to provide related instruction to a source edge application server (310C). The source edge application servers (3 10C) prepares the application context required for the UE (100) to be relocated and transfer the application context to a target edge application server (310D). The centralized edge enabler server (620) provides an IP address of the target edge application server (310D) to the UE (100) while relocating the application context.

The centralized edge enabler server (620) exposes a location reporting API to the edge application servers (310A, 310B) across multiple edge data networks (300A, 300B), in order to support tracking or checking the valid location of the UE (100). The location reporting API exposed by the edge application servers (310A, 310B) relies on a SCEFN/NEF northbound API for monitoring event of the location of the UE (100).

The centralized edge enabler server (620) exposes a UE identifier API to the edge application servers (310A, 310B) in order to provide a valid UE identifier for a capability exposure API over the edge (8A) and the edge (8B). The capability exposure API enables the edge application servers (310A, 310B) to point to a user anonymously over different service APIs exposed by the centralized edge enabler server (620).

The centralized edge enabler server (620) provides supporting functions needed for the edge enabler client (120) located within the UE (100). The interactions related to enabling edge computing between the centralized edge enabler server (620) and the edge enabler client (120) are supported by the edge (1). The edge (1) allows retrieval and provisioning of the configuration information for the UE (100). Further, the edge (1) allows discovery of the edge application servers (310A, 310B) available in the multiple edge data networks (300A, 300B).

The centralized edge enabler server (620) allows the edge enabler client (120) to discover the edge application servers (310A, 310B) across the multiple edge data networks (300A, 300B).

The centralized edge enabler server (620) allows a subscription from the edge enabler client (120) to the centralized edge enabler server (620) for a dynamic information such as a dynamic availability of the edge application servers (310A, 310B). In an embodiment, the subscription is very specific to one of the edge application servers (310A, 310B). In another embodiment, the subscription is generic to include all the edge application servers (310A, 310B).

The centralized edge enabler server (620) provides supporting functions needed for the 3GPP network (200). The edge (2) is the reference point that allow the interactions related to edge enabler layers between the edge enabler servers (320A, 320B) and the 3GPP network (200). The edge (2) allows an access to 3GPP network functions and APIs for retrieval of the network capability information.

In another embodiment, the centralized edge enabler server (620) can be deployed in a scenario when a distributed edge enabler server (320B) is not deployed within the edge data network (300A) and the centralized edge enabler server (620) supports the functionalities and the reference points. In another embodiment, the centralized edge enabler server (620) can be deployed within the 3GPP network (200) when the centralized edge enabler server (620) supports the functionalities and the reference points. In another embodiment, the centralized edge enabler server (620) can be deployed in another edge data network (300B) when the functionalities and the reference points are supported by the centralized edge enabler server (620).

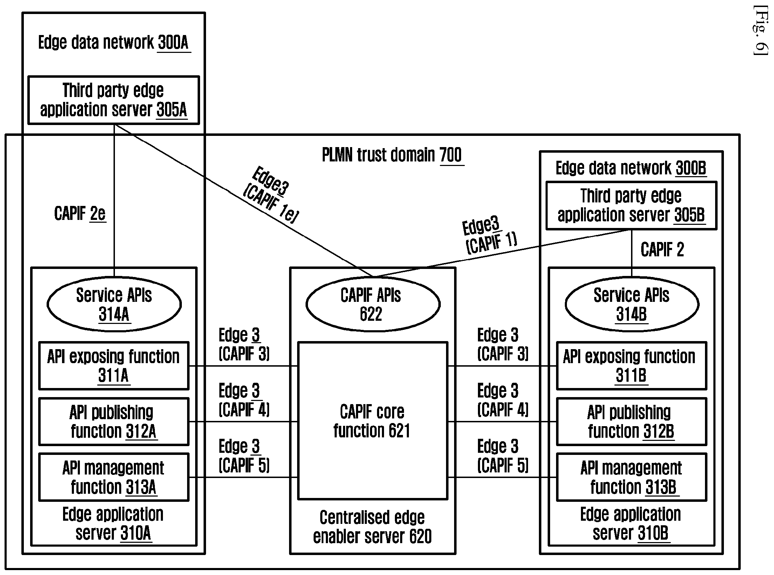

FIG. 6 illustrates a proposed architecture of the edge computing system (1000) for publishing and discovering service APIs (314A, 314B) of the edge application server (310A, 310B) by using the CAPIF core function (621), according to an embodiment as disclosed herein. The centralized edge enabler server (620) includes a CAPIF core function (621). A PLMN trust domain (700) of the edge computing system (1000) includes edge application servers (310A, 310B), a centralized edge enabler server (620), and a PLMN edge application server (305B), where the edge application server (310B) and the PLMN edge application server (305B) is included in the edge data network (300B). A third-party edge application server (305A) and an edge application server (310A) are part of an edge data network (300A), whereas the third party edge application server (305A) is not included in the PLMN trust domain (700).

The centralized edge enabler server (620) allows the edge application server (305A, 305B) owned by a third party or a PLMN operator for accessing the service APIs (314A, 314B) offered by other edge application servers (310A, 310B) within and across the edge data network (300A, 300B) by providing the CAPIF core function (621). In an embodiment, the third-party edge application server (305A) provides service APIs and the third-party edge application server (305A) exists outside the PLMN trust domain (700). The third-party edge application server (305A) are allowed to utilize the CAPIF core function (621) of the PLMN trust domain (700).

The centralized edge enabler server (620) provides the following function for publish and discovery of the service APIs (314A, 314B) of the edge application servers (310A, 310B). The CAPIF core function (621) allows onboarding of the edge application servers (310A, 310B) (i.e. API invokers), publishing of the service APIs (314A, 314B), discovering the service APIs (314A, 314B) and charging for invocations of the service APIs (314A, 314B).

The edge application servers (310A, 310B) provide the following function for publishing and discovering the service APIs (314A, 314B). The API exposing function (311A) allows the invocation of the service APIs (314A) exposed from the edge application server (310A) via CAPIF (2e). The API exposing function (311B) allows the invocation of the service APIs (314B) exposed from the edge application server (310B) via CAPIF (2). Further, the API exposing function (311A, 311B) allows charging for invocations of the service APIs (314A, 314B) via CAPIF (3). The API publishing function (312A, 312B) allows the publishing of the service APIs (314A, 314B) to the CAPIF core function (621) of the centralized edge enabler server (620) via CAPIF (4). The API management function (313A, 313B) allows a management of the service APIs (314A, 314B) to the CAPIF core function (621) via CAPIF (5).

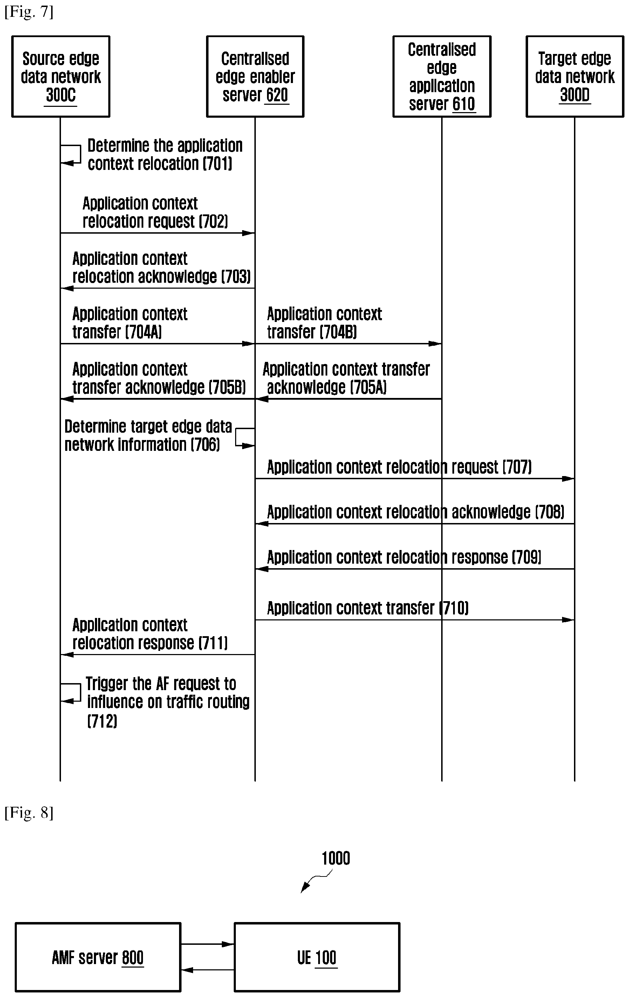

Further, following procedures are performed as specified in 3GPP TS 23.222. The edge application servers (310A, 310B) act as the API exposing functions (312A, 311B) and the edge application servers (310A, 310B) publishes the service APIs (314A, 314B) to the CAPIF core function (621) of the centralized edge enabler server (620). The service APIs (314A, 314B) of the edge data networks (300A, 300B) are made available to each other by the CAPIF core function (621). The edge application servers (310A, 310B) acts as the API invokers and is onboarded to the CAPIF core function (621). The edge application servers (310A, 310B) (i.e. API invokers) are authenticated with the CAPIF core function (621). The edge application servers (310A, 310B) discovers the service APIs (314A, 314B) published by the edge application servers (310A, 310B) via the CAPIF core function (621) by including end point address of the API exposing functions (311A, 311B). The service API invocation is performed based on the end point address. The edge application servers (310A, 310B) obtains authorization to invoke the service APIs (314A, 314B) from the CAPIF core function (621). The edge application servers (310A, 310B) invokes the service APIs (314A, 314B) after performing authentication with the CAPIF core function (621). FIG. 7 is a sequential diagram illustrating a method for managing an application context relocation, according to an embodiment as disclosed herein. Consider an example scenario, the UE (100) is playing an online video by receiving data of the online video from a first edge data network (i.e. source edge data network) (300C). Later the UE (100) moves from the first geographical location and reaches a second geographical location while playing the online video, where a second edge data network (target edge data network) (300C) is more closer to the UE (100) than the first edge data network (300C). The centralized edge enabler server (620) supports the application context relocation from the source edge data network (300C) to the target edge data network (300D), where the application context as per the example scenario is a position in the online video from which the UE (100) needs to switch receiving the data of the online video from the second edge data network (300D).

At step 701, the source edge data network (300C) determines the application context relocation, in response to receiving a request from the UE (100). At step 702, the source edge data network (300C) sends a request for the application context relocation to the centralized edge enabler server (620). In an embodiment, the request for the application context relocation includes a UE information, a source application instance information, a Core Network-Network Function information, an application identifier, and an Edge Enabler Client registration context. At step 703, the centralized edge enabler server (620) acknowledges to the source edge data network (300C) in response to receiving the request for the application context relocation.

At step 704A, the source edge data network (300C) transfers the application context to the centralised edge enabler server (620). At step 704B, the centralised edge enabler server (620) forwards the application context to the centralised edge application server 610. At step 705A, the centralised edge application server (610) acknowledges to the centralised edge enabler server (620) in response to receiving the application context. At step 705B, the centralised edge enabler server (620) acknowledges to the source edge data network (300C) in response to receiving the acknowledgment from the centralised edge application server (610). The centralized edge enabler server (620) temporarily holds the application context until the target edge data network (300D) is determined. At step 706, the centralized edge enabler server (620) determines an information regarding the target edge data network (300D).

At step 707, the centralized edge enabler server (620) sends the request for the application context relocation to the target edge data network (300D). At step 708, the target edge data network (300D) acknowledges to the centralized edge enabler server (620) in response to receiving the request for the application context relocation. At step 709, the target edge data network (300D) sends an application context relocation response to the centralized edge enabler server (620). In an embodiment, the application context relocation response includes the UE information, an accepted Src application instance information, and a temporary edge application server information. At step 710, the centralized edge enabler server (620D) transfers the application context to the target edge data network (300D), in response to receiving the application context relocation response. At step 711, the centralized edge enabler server (620) sends the application context relocation response to the source edge data network (300C). At step 712, the source edge data network (300C) triggers an Application Function request to influence on traffic routing.

FIG. 8 illustrates an overview of a system (1000) for handling a PDU session during an emergency service, according to an embodiment as disclosed herein.

The proposed method for managing the UE (100) and a network (not shown) for a scenario when the UE (100) has a PDU session for emergency services is described as follows. The UE (100) sends a registration request message containing a NSSAI request to an AMF (800). The AMF server (800) process the registration request message. The AMF server (800) initiates a network slice-specific authentication and authorization procedure for an S-NSSAI present in the NSSAI request which are subject to a network slice-specific authentication and authorization.

When the network slice-specific authentication and authorization fails for all S-NSSAIs in an allowed NSSAI and the UE (100) is establishing/established the PDU session of the emergency services, then the AMF server (800) sends a NAS message (e.g. Configuration update command) with a list of rejected S-NSSAIs and the network for each of the list with an appropriate rejection cause value. Further, the AMF server (800) keeps an emergency PDU session active and proceeds with the emergency services. The network does not deregister the UE (100). Further, the network deregisters the UE (100) when the PDU session for the emergency service is released. For example, the AMF deactivates all non-emergency PDU session(s) using a NAS signaling or implicitly. Further, the AMF server (800) indicates an implicit deactivation of all active PDU session in the NAS message to the UE (100). Further, the AMF server (800) sends the list of rejected NSSAI to the UE (100) during a de-registration procedure (e.g. De-registration request message).

When the network slice-specific authentication and authorization fails for all the S-NSSAIs in the allowed NSSAI, and the UE (100) does have the PDU session for the emergency services, then the AMF executes a network-initiated deregistration procedure and includes the list of rejected S-NSSAIs and each of the list with the appropriate rejection cause value to an explicit de-registration request message. In response to receiving the de-registration request message with the rejection cause related to scenarios such as 5GMM cause value to #62 "No network slices available", the UE (100) selects an Evolved-UMTS Terrestrial Radio Access Network (E-UTRAN) cell and initiates an attach procedure to an EPS network when the UE (100) finds a suitable cell on the E-UTRAN cell. For example, the UE (100) redirects the UE (100) to the EPS network by including an appropriate cause (e.g. #31 "Redirection to Evolved Packet Core (EPC) required") in the deregistration request message when the UE (100) can access an EPS service in the EPS network. In another example, the UE (100) redirects the UE (100) to the EPS network by including an indicator requesting the UE (100) to select the E-UTRAN cell. Upon receiving the deregistration request with the rejection cause or the indicator, the UE (100) performs at least one of the action as described below:
1) The UE (100) sets a Fifth Generation System (5GS) update status to a value "SU3 roaming not allowed" and stores the 5GS update status.
2) The UE (100) deletes any 5G Globally Unique Temporary Identifier (5G-GUTI), last visited registered Tracking Area Identity (TAI), a TAI list and a key set identifier (ngKSI).
3) The UE (100) resets a registration attempt counter and enters to a state "5GMM-deregistered"
4) The UE (100) enables an E-UTRA capability if the E-UTRA capability was disabled.
5) The UE (100) disables a N1 mode capability for a 3GPP access.
6) If the UE (100) is operating in single-registration mode, the UE handles EPS Mobility Management (EMM) parameters, an EMM state, an EPS update status, a 4G Globally Unique Temporary Identifier (4G-GUTI), the TAI list, a key set identifier (eKSI) and an attach attempt counter as specified in 3GPP TS 24.301 for a case when an EPS attach procedure is rejected with the EMM cause with a value corresponding to the SGMM cause value#62 "No network slices available".

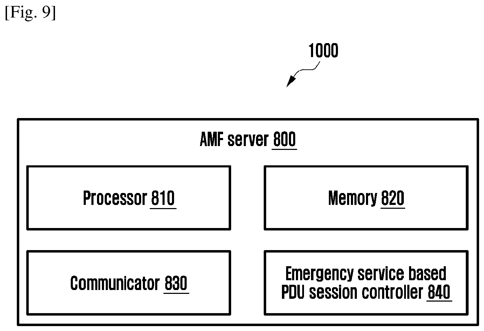

FIG. 9 is a block diagram of the AMF server (800), according to an embodiment as disclosed herein. The AMF server (800) includes a processor (810), a memory (820), a communicator (830) and an emergency service based PDU session controller (840). The processor (810) is provided with the memory (820), the communicator (830) and the emergency service based PDU session controller (840). The general operations of the processor (810), the memory (820), and the communicator (830) are already explained in the FIG. 2.

The emergency service based PDU session controller (840) is configured to detect one of a UE (100) has a PDU session for an emergency service and the UE (100) is establishing a PDU session for the emergency service. Further, the emergency service based PDU session controller (840) is configured to detect a network slice authentication and authorization fails for all allowed Network Slice Selection Identifier (NSSAI). In response detect one of the UE (100) has the PDU session for the emergency service and the UE (100) is establishing the PDU session for the emergency service and detecting the network slice authentication and authorization fails for all allowed NSSAI, the emergency service based PDU session controller (840) does not deregister the UE (100), and send a configuration update command including a rejected NSSAI and a rejection cause value to the UE (100).

Further, the emergency service based PDU session controller (840) is configured to determine that the PDU session for the emergency service is completed. Further, the emergency service based PDU session controller (840) is configured to de-register with the UE (100) in response to determining that the PDU session for the emergency service is completed. Further, the emergency service based PDU session controller (840) is configured to send a deregistration request message with the rejection cause value to the UE (100).

The foregoing description of the specific embodiments will so fully reveal the general nature of the embodiments herein that others can, by applying current knowledge, readily modify and/or adapt for various applications such specific embodiments without departing from the scope of the claims, and, therefore, such adaptations and modifications should and are intended to be comprehended within the meaning of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as encompassed by the claims.

## Claims

1. A method performed by an Access and Mobility Management Function, AMF (800), in a wireless communication system, the method comprising:
detecting that a User Equipment, UE (100), has established a PDU session for an emergency service or the UE (100) is establishing a PDU session for the emergency service;
detecting that a network slice authentication and authorization fails for all allowed Network Slice Selection Identifiers, NSSAIs,
wherein when the AMF detects that the network slice authentication and authorization fails for all allowed NSSAIs, the method further comprises the AMF keeping a registration of the UE (100) with regard to the PDU session; and
sending, to the UE (100), a configuration update command including at least one rejected NSSAI with a rejection cause value.

2. The method of claim 1, further comprising:
in case that the PDU session for the emergency service is released, sending, to the UE (100), a deregistration request message with the rejection cause value.

3. The method of claim 1, wherein the rejection cause value is #62.

4. A method performed by a User Equipment, UE (100), in a wireless communication system, the method comprising:
receiving, from an Access and Mobility Management Function, AMF (800), a configuration update command including at least one rejected NSSAI with a rejection cause value,
wherein the UE (100) has established a Protocol Data Unit, PDU, session for an emergency service or the UE (100) is establishing a PDU session for the emergency service, and
wherein the AMF (800) is keeping a registration of the UE (100) with regard to the PDU session.

5. The method of claim 4, further comprising:
receiving, from the AMF (800), a deregistration request message with the rejection cause value;
selecting, an Evolved Terrestrial Radio Access Network, E-UTRAN, cell of a network; and
disabling, an N1 mode capability for a 3GPP access.

6. The method of claim 4, wherein the rejection cause value is #62.

7. An Access and Mobility Management Function, AMF (800), in a wireless communication system, the AMF comprises:
a memory (820); and
a processor (810), coupled with the memory (820), configured to:
detect that a User Equipment, UE (100), has established a PDU session for an emergency service or the UE (100) is establishing a PDU session for the emergency service,
detect that a network slice authentication and authorization fails for all allowed Network Slice Selection Identifiers, NSSAIs,
wherein when the AMF detects that the network slice authentication and authorization fails for all allowed NSSAIs, the AMF is further configured to
keep a registration of the UE (100) with regard to the PDU session, and
send, to the UE (100), a configuration update command including at least one rejected NSSAI with a rejection cause value.

8. The AMF (800) of claim 7,
wherein the processor is further configured to:
in case that the PDU session for the emergency service is released, send, to the UE (100), a deregistration request message with the rejection cause value.

9. The AMF (800) of claim 7,
wherein the rejection cause value is #62.

10. A User Equipment, UE (100), in a wireless communication system, the UE comprises:
a memory (130); and
a processor (140), coupled with the memory (130), configured to:
receive, from an Access and Mobility Management Function, AMF (800), a configuration update command including at least one rejected NSSAI with a rejection cause value,
wherein the UE (100) has established a Protocol Data Unit, PDU, session for an emergency service or the UE (100) is establishing a PDU session for the emergency service, and
wherein the AMF (800) is keeping a registration of the UE (100) with regard to the PDU session.

11. The UE (100) of claim 10,
wherein the processor is further configured to:
receive, from the AMF (800), a deregistration request message with the rejection cause value,
select, an Evolved Terrestrial Radio Access Network, E-UTRAN, cell of a network, and
disable an N1 mode capability for a 3GPP access.

12. The UE (100) of claim 10,
wherein the rejection cause value is #62.

## Patentansprüche

1. Verfahren, das von einer Zugriffs- und Mobilitätsverwaltungsfunktion, AMF (800), in einem drahtlosen Kommunikationssystem durchgeführt wird, wobei das Verfahren umfasst:
Erkennen, dass ein Benutzergerät, UE (100), eine PDU-Sitzung für einen Notdienst aufgebaut hat oder dass das UE (100) eine PDU-Sitzung für den Notdienst aufbaut;
Erkennen, dass eine Authentifizierung und Autorisierung eines Netz-Slice für alle zulässigen Netz-Slice-Auswahlkennungen, NSSAIs, fehlschlägt,
wobei, wenn die AMF feststellt, dass die Netz-Slice-Authentifizierung und -Autorisierung für alle zulässigen NSSAIs fehlschlägt, umfasst das Verfahren ferner, dass die AMF eine Registrierung des UE (100) in Bezug auf die PDU-Sitzung aufrechterhält; und
Senden eines Konfigurationsaktualisierungsbefehls an das UE (100), der mindestens eine abgelehnte NSSAI beinhaltet mit einem Wert für die Ablehnungsursache.

2. Verfahren nach Anspruch 1, ferner umfassend:
für den Fall, dass die PDU-Sitzung für den Notdienst freigegeben wird, Senden einer Anforderungsnachricht zur Abmeldung mit dem Wert für die Ablehnungsursache an das UE (100).

3. Verfahren nach Anspruch 1, wobei der Wert für die Ablehnungsursache #62 ist.

4. Verfahren, das von einem Benutzergerät, UE (100), in einem drahtlosen Kommunikationssystem durchgeführt wird, wobei das Verfahren umfasst:
Empfangen, von einer Zugriffs- und Mobilitätsverwaltungsfunktion, AMF (800), eines Konfigurationsaktualisierungsbefehls, der mindestens eine abgelehnte NSSAI beinhaltet mit einem Wert für die Ablehnungsursache,
wobei das UE (100) eine Protokolldateneinheits-, PDU-,Sitzung für einen Notdienst aufgebaut hat oder das UE (100) eine PDU-Sitzung für den Notdienst aufbaut, und
wobei die AMF (800) eine Registrierung des UE (100) in Bezug auf die PDU-Sitzung aufrechterhält.

5. Verfahren nach Anspruch 4, ferner umfassend:
Empfangen einer Anforderungsnachricht zur Abmeldung mit dem Wert für die Ablehnungsursache von der AMF (800);
Auswählen einer Evolved Terrestrial-Funkzugangsnetz-, E-UTRAN-,Zelle eines Netzes; und
Deaktivieren einer N1-Modus-Funktion für einen 3GPP-Zugriff.

6. Verfahren nach Anspruch 4, wobei der Wert für die Ablehnungsursache #62 ist.

7. Zugriffs- und Mobilitätsverwaltungsfunktion, AMF (800), in einem drahtlosen Kommunikationssystem, wobei die AMF umfasst:
einen Speicher (820); und
einen Prozessor (810), der mit dem Speicher (820) gekoppelt und konfiguriert ist zum:
Erkennen, dass ein Benutzergerät, UE (100), eine PDU-Sitzung für einen Notdienst aufgebaut hat oder dass das UE (100) eine PDU-Sitzung für den Notdienst aufbaut,
Erkennen, dass eine Authentifizierung und Autorisierung eines Netz-Slice für alle zulässigen Netz-Slice-Auswahlkennungen, NSSAIs, fehlschlägt,
wobei, wenn die AMF feststellt, dass die Netz-Slice-Authentifizierung und - Autorisierung für alle zulässigen NSSAIs fehlschlägt, ist die AMF ferner konfiguriert, um eine Registrierung des UE (100) in Bezug auf die PDU-Sitzung aufrechtzuerhalten, und
Senden eines Konfigurationsaktualisierungsbefehls an das UE (100), der mindestens eine abgelehnte NSSAI beinhaltet mit einem Wert für die Ablehnungsursache.

8. AMF (800) nach Anspruch 7,
wobei der Prozessor ferner konfiguriert ist zum:
für den Fall, dass die PDU-Sitzung für den Notdienst freigegeben wird, Senden einer Anforderungsnachricht zur Abmeldung mit dem Wert für die Ablehnungsursache an das UE (100).

9. AMF (800) nach Anspruch 7,
wobei der Wert für die Ablehnungsursache #62 ist.

10. Benutzergerät, UE (100), in einem drahtlosen Kommunikationssystem, wobei das UE umfasst:
einen Speicher (130); und
einen Prozessor (140), der mit dem Speicher (130) gekoppelt und konfiguriert ist zum:
Empfangen, von einer Zugriffs- und Mobilitätsverwaltungsfunktion, AMF (800), eines Konfigurationsaktualisierungsbefehls, der mindestens eine abgelehnte NSSAI beinhaltet mit einem Wert für die Ablehnungsursache,
wobei das UE (100) eine Protokolldateneinheits-, PDU-,Sitzung für einen Notdienst aufgebaut hat oder das UE (100) eine PDU-Sitzung für den Notdienst aufbaut, und
wobei die AMF (800) eine Registrierung des UE (100) in Bezug auf die PDU-Sitzung aufrechterhält.

11. UE (100) nach Anspruch 10,
wobei der Prozessor ferner konfiguriert ist zum:
Empfangen einer Anforderungsnachricht zur Abmeldung mit dem Wert für die Ablehnungsursache von der AMF (800),
Auswählen einer Evolved Terrestrial-Funkzugangsnetz-, E-UTRAN-,Zelle eines Netzes, und
Deaktivieren einer N1-Modus-Funktion für einen 3GPP-Zugriff.

12. UE (100) nach Anspruch 10,
wobei der Wert für die Ablehnungsursache #62 ist.

## Revendications

1. Procédé exécuté par une fonction de gestion d'accès et de mobilité, AMF (800), dans un système de communication sans fil, le procédé comprenant :
détecter qu'un équipement d'utilisateur, UE (100), a établi une session PDU pour un service d'urgence ou que l'UE (100) est en train d'établir une session PDU pour le service d'urgence ;
détecter qu'une authentification et une autorisation d'une tranche de réseau échouent pour tous les identificateurs de sélection de tranche de réseau, NSSAI, autorisés,
dans lequel, lorsque l'AMF détecte que l'authentification et l'autorisation de tranche de réseau échouent pour tous les NSSAI autorisés, le procédé comprend en outre le maintien par l'AMF d'un enregistrement de l'UE (100) en ce qui concerne la session PDU ; et
envoyer, à l'UE (100), une commande de mise à jour de configuration comprenant au moins un NSSAI rejeté avec une valeur de cause de rejet.

2. Procédé de la revendication 1, comprenant en outre :
dans le cas où la session PDU pour le service d'urgence est libérée, envoyer, à l'UE (100), un message de demande de désenregistrement avec la valeur de cause de rejet.

3. Procédé de la revendication 1, dans lequel la valeur de cause de rejet est #62.

4. Procédé exécuté par un équipement utilisateur, UE (100), dans un système de communication sans fil, le procédé comprenant :
recevoir, d'une fonction de gestion d'accès et de mobilité, AMF (800), une commande de mise à jour de configuration comprenant au moins un NSSAI rejeté avec une valeur de cause de rej et,
dans lequel l'UE (100) a établi une session d'unité de données de protocole, PDU, pour un service d'urgence ou l'UE (100) est en train d'établir une session PDU pour le service d'urgence, et
dans lequel l'AMF (800) maintient un enregistrement de l'UE (100) en ce qui concerne la session PDU.

5. Procédé de la revendication 4, comprenant en outre :
recevoir, de l'AMF (800), un message de demande de désenregistrement comportant la valeur de cause de rejet ;
sélectionner une cellule de réseau d'accès radio terrestre évolué, E-UTRAN, d'un réseau ; et
désactiver une capacité de mode N1 pour un accès 3GPP.

6. Procédé de la revendication 4, dans lequel la valeur de cause de rejet est #62.

7. Fonction de gestion d'accès et de mobilité, AMF (800), dans un système de communication sans fil, l'AMF comprenant :
une mémoire (820) ; et
un processeur (810), couplé à la mémoire (820), configuré pour :
détecter qu'un équipement d'utilisateur, UE (100), a établi une session PDU pour un service d'urgence ou que l'UE (100) est en train d'établir une session PDU pour le service d'urgence,
détecter qu'une authentification et une autorisation d'une tranche de réseau échouent pour tous les identificateurs de sélection de tranche de réseau, NSSAI, autorisés,
dans lequel, lorsque l'AMF détecte que l'authentification et l'autorisation de tranche de réseau échouent pour tous les NSSAI autorisés, l'AMF est en outre configuré pour maintenir un enregistrement de l'UE (100) en ce qui concerne la session PDU, et
envoyer, à l'UE (100), une commande de mise à jour de configuration comprenant au moins un NSSAI rejeté avec une valeur de cause de rejet.

8. AMF (800) de la revendication 7,
dans laquelle le processeur est en outre configuré pour :
dans le cas où la session PDU pour le service d'urgence est libérée, envoyer, à l'UE (100), un message de demande de désenregistrement avec la valeur de cause de rejet.

9. AMF (800) de la revendication 7,
dans laquelle la valeur de cause de rejet est #62.

10. Équipement utilisateur, UE (100), dans un système de communication sans fil, l'UE comprenant :
une mémoire (130) ; et
un processeur (140), couplé à la mémoire (130), configuré pour :
recevoir, d'une fonction de gestion d'accès et de mobilité, AMF (800), une commande de mise à jour de configuration comprenant au moins un NSSAI rejeté avec une valeur de cause de rejet,
dans lequel l'UE (100) a établi une session d'unité de données de protocole, PDU, pour un service d'urgence ou l'UE (100) est en train d'établir une session PDU pour le service d'urgence, et
dans lequel l'AMF (800) maintient un enregistrement de l'UE (100) en ce qui concerne la session PDU.

11. UE (100) de la revendication 10,
dans lequel le processeur est en outre configuré pour :
recevoir, de l'AMF (800), un message de demande de désenregistrement comportant la valeur de cause de rejet,
sélectionner une cellule de réseau d'accès radio terrestre évolué, E-UTRAN, d'un réseau, et
désactiver une capacité de mode N1 pour un accès 3GPP.

12. UE (100) de la revendication 10,
dans lequel la valeur de cause de rejet est #62.
